# EUROPÄISCHE PATENTSCHRIFT

(11) **EP 0 905 591 B1**
(45) Veröffentlichungstag und Bekanntmachung des Hinweises auf die Patenterteilung: **10.12.2003**
(21) Anmeldenummer: 98117572.2
(22) Anmeldetag: 16.09.1998
(51) Int. Cl.: G05B 19/401, G05B 19/402, B21J 7/46, B30B 1/18

(54) **Vorrichtung zum Ermitteln der sich annähernden Werkzeuge einer Umformmaschine**
Device for evaluating the position of an approaching tool in a forming machine
Dispositif pour évaluer la position d'un outil s'approchant dans une machine de formage

(30) Priorität: 25.09.1997 DE 19742228
(43) Veröffentlichungstag der Anmeldung: 31.03.1999
(73) Patentinhaber: SMS EUMUCO GmbH, 51377 Leverkusen (DE)
(72) Erfinder: Fuchshofen, Dieter, 51371 Leverkusen (DE); Rehbein, Willi, 41468 Neuss (DE)
(74) Vertreter: Valentin, Ekkehard, Dipl.-Ing.

(56) Entgegenhaltungen:
- EP-A- 0 499 876
- EP-A- 0 640 438
- DE-A- 3 622 845
- DE-A- 4 132 011
- US-A- 4 057 212
- US-A- 4 661 797

## Beschreibung

Die Erfindung betrifft eine Vorrichtung zum Ermitteln der sich annähernden Werkzeuge einer Umformmaschine zum Gesenkschmieden, wie ein Schmiedehammer oder eine Spindelpresse, umfassend eine kontaktlose Abstandssensorik, die mit einer Auswerteeinheit und einer Steuereinrichtung verbunden ist.

Eine Messung des sich mit jedem Schlag zwischen den Werkzeugen verändernden Abstandes mit Hilfe eines Abstandssensors ist zur Steuerung einer schlagenden Gesenk-Umformmaschine bezüglich der durch eine Folge von Schlägen erreichten Enddicke eines fertiggestellten Werkstückes durch die DE 41 32 011 C2 bekanntgeworden. Zur Meßwertermittlung bzw. Wegmessung ist dort der mit einem Obergesenk relativ zu einem Untergesenk bzw. -werkzeug auf- und abbewegliche Bär an einer Seite mit einer Schräge versehen, auf welche ein am Maschinengestell bzw. dessen Ständer angebrachter, als Wirbelstrom-Wegaufnehmer ausgebildeter Abstandssensor ausgerichtet ist. Die von der Schräge und dem Abstandssensor gebildete Wegmeßeinrichtung führt bei jedem Schlag der Folge die jeweilige gemessene Dicke des Werkstückes einer Steuereinrichtung und gegebenenfalls einer Speichereinrichtung zu. In dem Programmspeicher ist angegeben, mit welcher Schlagenergie bei der gemessenen Dicke der nächste Schlag der Folge durchzuführen ist, um mit möglichst wenig weiteren Schlägen am schnellsten und am genauesten an die gewünschte Enddicke heranzukommen. Es ist damit möglich, über die Steuereinrichtung und die Steuereinheit den jeweils nachfolgenden Schlag in der Kraft bzw. der Energie selbsttätig so einzustellen, wie es im Hinblick auf die wachsende Annäherung an die Enddicke bzw. den Sollwert im Programmspeicher vorgesehen ist.

Mit dieser Meßanordnung bzw. Kombination von bärseitiger Schräge und im Ständer angebrachtem Abstandssensor werden zwar die bei solchen schlagenden Umformmaschinen aufgrund der hohen Beschleunigungen auftretenden meßwertverfälschenden Einflüsse weitestgehend umgangen, jedoch mit dem Kompromiß, daß der Meßort in den Ständer verlegt worden ist, so daß unvermeidlich andere Wege vorliegen, als im Werkzeug, d.h. zwischen Ober- und Untergesenk; aber gerade dort kommt es jedoch für ein Schmieden eines Werkstückes auf ein genaues Endmaß in vertikaler Richtung auf hohe Genauigkeit an. Außerdem wirken sich natürlich bei jedem Schlag die Ständerdehnungen auf den unmittelbar ständerseitig angeordneten Abstandssensor aus.

Der Erfindung liegt die Aufgabe zugrunde, eine gattungsgemäße Vorrichtung zu schaffen, die es ohne die genannten Nachteile ermöglicht mit höchster Genauigkeit eine gewünschte minimale Schließlage bzw. eine völlige Schließlage der Werkzeuge direkt zwischen den Werkzeugen oder indirekt, d.h. zwischen anderen für die Meßwerterfassung in Bezug genommenen Maschinenbauteilen, von denen wenigstens eines beweglich ist, zu ermitteln und entsprechend die Schlagenergie der Folgeschläge abhängig von den Meßwerten zu steuern bzw. zu dosieren.

Diese Aufgabe wird erfindungsgemäß dadurch gelöst, daß die Abstandssensorik von den Werkzeugen bzw. anderen zur Meßwertgebung in Bezug genommenen Maschinenbauteilen entkoppelt auf einem separaten, mit seinem die Abstandssensorik aufweisenden freien Ende zur Abstandsmessung in den Hubweg verlagerbaren Tragarm angeordnet ist. Es läßt sich damit eine Abstandsmessung der sich - je nach Maschinenbauart horizontal oder vertikal - annähernden Werkzeuge unmittelbar am Ort des für eine unverfälschte Meßwerterfassung maßgeblichen Geschehens erreichen, nämlich entweder unmittelbar zwischen den Werkzeugen, zwischen dem Oberwerkzeug bzw. oberen Werkzeughalter und dem unteren Werkzeughalter bzw. Schabotten-Kopf oder zwischen der Schabotte - bzw. bei z.B. einer Spindelpresse dem Ständer - und dem das Oberwerkzeug tragenden Stößel bzw. anderen für den Hubweg in Bezug genommenen Bauteilen der Umformmaschine. Aufgrund der Maßnahme der Entkopplung der Sensorik von den Werkzeugen oder dergleichen können sich die außerordentlich hohen Beschleunigungen nicht nachteilig auswirken, wie das beispielsweise im Falle eines unmittelbar im Unterwerkzeug oder im Werkzeughalter des Unterwerkzeuges angeordneten Abstandssensors selbst dann der Fall wäre, wenn dieser mit einer aufwendigen und teuren, hochresistenten Vergußtechnik oder mit einer sehr elastischen Aufhängung, worunter dann aber die Messung aufgrund der Schwingungen leiden würde, dort angeordnet wäre.

Die erfindungsgemäß mögliche Kontrolle der Schließlage, d.h. der Werkzeugposition im geschlossenen Zustand bietet wegen der unterschiedlichen Defomationen eine genaue Aussage darüber, ob die Aufschlagfläche des Untergesenks mehr oder weniger erreicht worden ist. Die Aufschlagfläche wird bekanntermaßen beim Fertigpressen zur Einhaltung von engen Dickentoleranzen und für einen Kalibriereffekt im elastischen Bereich genutzt. Eine gleiche Aussage ist aber auch bei noch nicht völlig geschlossenen Werkzeugen möglich und zwar dann, wenn beispielsweise das Schmiedestück mit einer in der Teilungsebene der Werkezeuge liegenden Gratbahn hergestellt wird. so daß dann die gewünschte minimale Schließlage dieselben Aussagen und eine entsprechende Einflußnahme auf den letzten Schlag bzw. Hub ermöglicht. Weiterhin läßt sich anhand der erreichten sehr genauen Meßwerte feststellen, ob mit der eingestellten Dosierung das gewünschte Fertigmaß erreicht wird oder gegebenenfalls der oder die Folgehübe bzw. -schläge variiert und mit einer von der geplanten Energie abweichenden Energie durchgeführt werden sollten. Angestrebt wird hierbei eine gleiche Dicke aller Schmiedestücke, deren Stärke bzw. Dickenmaß nach dem Fertigpressen möglichst wenig schwanken soll. Die erfindungsgemäße Abstandsmessung sichert das Schmieden gleich dicker Schmiedeteile derart, daß die der Dicke des Schmiedeteiles entsprechenden Abstände gemessen, ausgewertet und die Energiedosierung des Folgeschlages oder der Folgeschläge korrigiert wird.

Dadurch minimiert sich die jeweilige Dickenabweichung des Folgeschlages oder der Folgeschläge von bzw. innerhalb der Sollabweichung der einzelnen Schläge.

Der letzte Schlag läßt sich somit ohne wesentliche Nachregelung durchführen, da bereits bei den Vorschlägen eine jeweilige Energieanpassung und damit Dickenregelung erfolgt und die Schmiedeteildicke des Fertigschlages sichert.

Der Tragarm läßt sich nach einem Vorschlag der Erfindung vorteilhaft als Ein- und Ausschwenkarm ausbilden. Die Schwenkbarkeit erlaubt es, im Gegensatz zu einem alternativen stationären Tragarm bzw. damit vergleichbaren Trägerelement der Sensorik, mit dem geringsten Aufwand den Werkzeugraum frei zu machen, beispielsweise wenn die Werkzeuge angewärmt oder nachgeheizt werden sollen.

Eine bevorzugte Ausführung der Erfindung sieht vor, daß der Tragarm mit zwei gegensinnig angeordneten Abstandssensoren bestückt ist. In der Auswerteeinheit läßt sich aus der Summe der oberen und unteren Wege der genaue Abstand ermitteln. Statt zwei einzelne Sensoren vorzusehen, könnte auch ein mit zwei Sensoren bestückter Kombikopf zum Einsatz kommen. Für eine optimierte Abstandsmessung sind zwei gegensinnige Wirkfelder, die in der Empfindlichkeitsrichtung der Bewegungsteile arbeiten wohl auf jeden Fall zweckmäßig.

Zur Entkopplung der Sensorik läßt sich der Tragarm nach vorteilhaften Ausgestaltungen der Erfindung sowohl fundament- als auch maschinengebunden anordnen. Die Entkopplung der teuren Abstandssensorik bringt zudem den großen Vorteil mit sich, daß keine Notwendigkeit besteht, diese beim Werkzeugwechsel ebenfalls wechseln bzw. demontieren zu müssen, denn in der ausgeschwenkten Außerbetriebsposition - bzw. bei einem stationären Tragarm nach dessen einfacher Demontage durch z.B. Lösen eines Schnellverschlusses oder Entfernen von Verankerungs- oder Befestigungsstiften - liegen die Werkzeuge oder dergleichen völlig frei und ungehindert von dem Schwenkarm bzw. dem Tragarm mit der Sensorik.

Wenn nach einem Vorschlag der Erfindung an zwei gegenüberliegenden Werkzeugseiten einander zugewandt angeordnete Tragarme vorhanden sind und damit eine beidseitige Meß-Anordnung vorliegt, läßt sich auch eine eventuelle Kippung messen und berücksichtigen.

Schließlich wird vorgeschlagen, daß die Abstandssensoren - wie auch beim eingangs genannten Stand der Technik - Wirbelstrom-Wegaufnehmer sind, damit eine hohe Meßrate gewährleistet ist.

Weitere Merkmale und Vorteile der Erfindung ergeben sich aus den Patentansprüchen und der nachfolgenden Beschreibung, in der ein Ausführungsbeispiel des Gegenstandes der Erfindung näher erläutert ist. Am Beispiel eines Schmiedehammers mit Tragarm als Tragelement für eine Abstandssensorik zeigen:
- Fig. 1: als Einzelheit eines Schmiedehammers dessen Werkzeuganordnung mit an einem Schwenkarm angeordneter und in die Betriebsposition zwischen Ober- und Unterwerkzeug eingeschwenkter Abstandssensorik, teilgeschnitten dargestellt; und
- Fig. 2: in vergrößertem Maßstab als Einzelheit den in Fig. 1 eingekreisten und mit "X" gekennzeichneten Bereich.

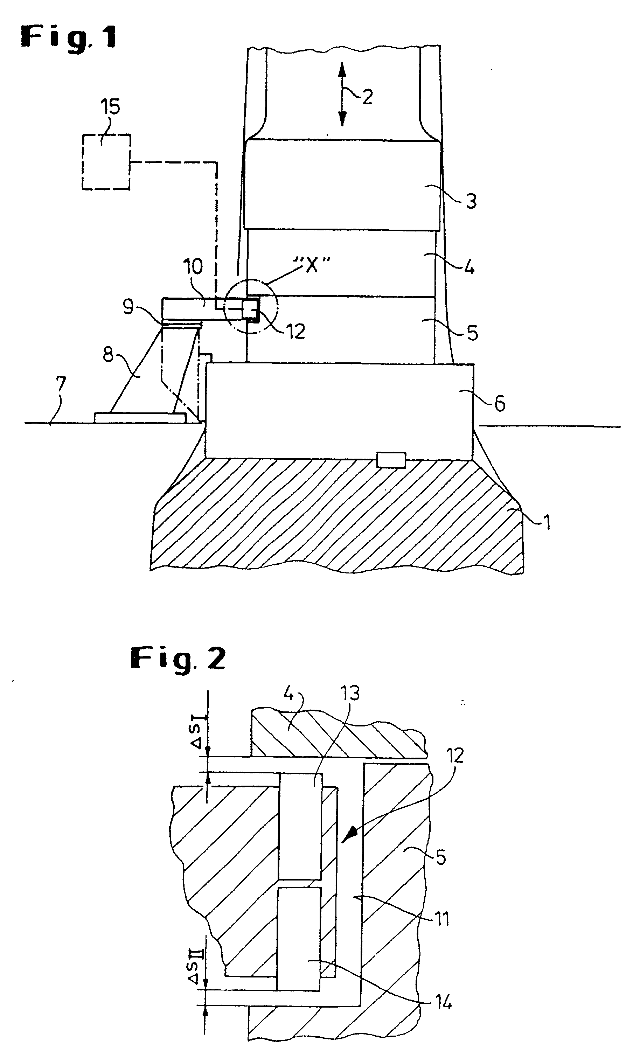

Von einem hinlänglich bekannten Schmiedehammer (vgl. z.B. DE 37 40 815 A1) sind in Fig. 1 der Einfachheit halber im wesentlichen lediglich dessen Werkzeuge einschließlich Halterungen gezeigt. Hierbei ist an einem in einer Führung des Maschinenrahmens 1 gemäß Pfeil 2 auf- und abbeweglichen Bär 3 ein Obergesenk bzw. - werkzeug 4 befestigt. Dieses wirkt mit einem Untergesenk bzw. -werkzeug 5 zusammen, das von einem stationären Werkzeughalter 6 und/oder einer Schabotte des Maschinenrahmens 1 getragen wird. Die Werkzeuge 4, 5 sind in Fig. 1 in ihrer Schließlage gezeigt.

Dem Schlaghammer ist an einer Seite ein in einem mit dem Fundament 7 verankerten Tragrahmen 8 bzw. Bock in einem Drehlager 9 ein- und ausschwenkbar gelagerter Schwenkarm 10 zugeordnet. Wie in Fig. 1 strichpunktiert angedeutet, kann der Schwenkarm 10 alternativ auf einem mit dem Maschinenrahmen verankerten Bock bzw. Tragrahmen angeordnet werden. Das freie, in eine Ausnehmung 11 des Unterwerkzeuges 5 vorkragende Ende des Schwenkarmes 10 ist mit einer Abstandssensorik 12 bestückt, die gemäß Fig. 2 zwei gegensinnig angeordnete Abstandssensoren 13 bzw. 14 aufweist. Diese ist - wie in Fig. 1 symbolhaft gestrichelt dargestellt - elektrisch an eine Auswerte- und Steuereinheit 15 angeschlossen. Der sich verändernde Abstand zwischen den sich annähernden Werkzeugen 4 und 5 wird durch Summenbildung ermittelt, wobei sich der Abstand aus der Addition von S_{I} und S_{II} ergibt. Die aufgrund der Entkopplung der Abstandssensorik von den Werkzeugen bzw. dem Maschinenrahmen 1 des Schlaghammers erreichte, von Betriebseinflüssen unbeschadete und damit sehr genaue Meßwerterfassung ermöglicht eine exakte Ermittlung einer gewünschten minimalen bzw. völligen Schließlage und eine gezielte, auf das Fertigmaß des zu schmiedenden Werkstückes abgestimmte Dosierung der Schlagenergie sowie Variationen des Hubes der Folgeschläge.

Die Abstandssensorik 12 läßt sich hierbei abweichend von dem Ausführungsbeispiel statt in eine Ausnehmung 11 des Unterwerkzeuges zwischen beispielsweise an die Werkzeuge angegossene, seitlich vorkragende Ohren oder zwischen dem Oberwerkzeug 4 und dem unteren Werkzeughalter oder zwischen Schabotte bzw. Ständer und dem Bär 3 vorsehen, ohne daß sich hierdurch die Entkopplung von den Werkzeugen ändert und auch in jedem Fall eine Messung der sich im Schlag annähernden Werkzeuge direkt in vertikaler oder horizontaler Richtung durch Summenbildung des - bezogen jeweils auf das maßgebliche Bauteil - oberen und unteren bzw. vorderen und hinteren Abstandes gewährleistet ist.

## Patentansprüche

1. Vorrichtung zum Ermitteln der sich annähernden Werkzeuge einer Umformmaschine zum Gesenkschmieden, wie ein Schmiedehammer oder eine Spindelpresse, umfassend eine kontaktlose Abstandssensorik, die mit einer Auswerteeinheit und einer Steuereinrichtung verbunden ist,
**dadurch gekennzeichnet,**
**daß** die Abstandssensorik (12) von den Werkzeugen (4, 5) entkoppelt auf einem separaten, mit seinem die Abstandssensorik (12) aufweisenden freien Ende zur Abstandsmessung in den Hubweg vorkragenden Tragarm (10) angeordnet ist.

2. Vorrichtung nach Anspruch 1,
**dadurch gekennzeichnet,**
**daß** der Tragarm als Ein- und Ausschwenkarm (10) ausgebildet ist.

3. Vorrichtung nach Anspruch 1 oder 2,
**dadurch gekennzeichnet,**
**daß** der Tragarm (10) mit zwei gegensinnig angeordneten Abstandssensoren (13, 14) bestückt ist.

4. Vorrichtung nach einem der Ansprüche 1 bis 3,
**dadurch gekennzeichnet,**
**daß** der Tragarm (10) neben der Umformmaschine fundamentgebunden angeordnet ist.

5. Vorrichtung nach einem der Ansprüche 1 bis 3,
**dadurch gekennzeichnet,**
**daß** der Tragarm (10) maschinengebunden angeordnet ist.

6. Vorrichtung nach einem der Ansprüche 1 bis 5,
**gekennzeichnet durch**
an zwei gegenüberliegenden Werkzeugseiten einander zugewandt angeordnete Tragarme (10).

7. Vorrichtung nach einem der Ansprüche 1 bis 6,
**dadurch gekennzeichnet,**
**daß** die Abstandssensoren (13, 14) Wirbelstrom-Wegaufnehmer sind.

## Claims

1. A device for determining converging tools of a thermoforming machine for drop-forging, e.g., a forging hammer or spindle press, comprising solid-state ranging sensors connected with an evaluation unit and control unit, **characterized in that** the ranging sensors (12) are decoupled from the tools (4, 5) and arranged on a separate mounting arm (10) whose free end with the ranging sensors (12) for distance measurement projects into the stroke path.

2. The device according to claim 1, **characterized in that** the mounting arm is designed as an inwardly and outwardly swiveling arm (10).

3. The device according to claim 1 or 2, **characterized in that** the mounting arm (10) is fitted with two opposing ranging sensors (13, 14).

4. The device according to one of claims 1 to 3, **characterized in that** the mounting arm (10) is situated next to the thermoforming machine, bonded to the base.

5. The device according to one of claims 1 to 3, **characterized in that** the mounting arm (10) is bonded to the machine.

6. The device according to one of claims 1 to 5, **characterized by** mounting arms (10) facing each other on two opposing tool sides.

7. The device according to one of claims 1 to 6, **characterized in that** the ranging sensors (13, 14) are eddy current displacement sensors.

## Revendications

1. Dispositif pour déterminer la position d'outils s'approchant d'une machine de formage pour l'estampage, tels qu'un pilon d'estampage ou une presse à vis, comprenant un capteur de distance sans contact, qui est raccordé à une unité d'évaluation et un dispositif de commande, **caractérisé en ce que** le capteur de distance (12) est disposé, en étant découple des outils (4, 5), sur un bras support (10) séparé, s'avançant avec son extrémité libre, présentant le capteur de distance (12) au niveau de la course d'élévation pour la mesure de la distance.

2. Dispositif selon la revendication 1, **caractérisé en ce que** le bras support est exécuté sous forme d'un bras (10) pouvant pivoter vers et en dehors de ladite course.

3. Dispositif selon la revendication 1 ou 2, **caractérisé en ce que** le bras support (10) est équipé de deux capteurs de distance (13, 14) disposés en sens inverse.

4. Dispositif selon l'une quelconque des revendications 1 à 3, **caractérisé en ce que** le bras support (10) est disposé à côté de la machine de formage, en étant relié aux fondations.

5. Dispositif selon l'une quelconque des revendications 1 à 3, **caractérisé en ce que** le bras support (10) est disposé en étant relié à la machine.

6. Dispositif selon l'une quelconque des revendications 1 à 5, **caractérisé par** deux bras support (10) disposés sur deux côtés opposés de l'outil, l'un en face de l'autre.

7. Dispositif selon l'une quelconque des revendications 1 à 6, **caractérisé en ce que** les capteurs de distance (13, 14) sont des capteurs de parcours à courant de Foucault.
